# EUROPEAN PATENT APPLICATION

(11) **EP 4 164 078 A1**
(43) Date of publication of application: **12.04.2023**
(21) Application number: 22200342.8
(22) Date of filing: 07.10.2022
(51) Int. Cl.: H02J 1/10, H02J 7/00

(54) **ENERGY STORAGE SYSTEM AND CONTROL METHOD THEREOF**

(30) Priority: 09.10.2021 CN 202111176065
(71) Applicant: Huawei Digital Power Technologies Co., Ltd., Shenzhen, 518043 (CN)
(72) Inventor: LI, Lin, 518129 Shenzhen (CN); GUO, Haibin, 518129 Shenzhen (CN); ZHOU, He, 518129 Shenzhen (CN)
(74) Representative: Gill Jennings & Every LLP

(57) **Abstract**

This application provides an energy storage system and a control method thereof, so that a voltage level of an energy storage module in the energy storage system can be flexibly matched, and the energy storage module can be effectively controlled based on a voltage of a direct current bus, to implement a high response speed. The energy storage system includes a plurality of energy storage modules, and each of the plurality of energy storage modules is connected to the direct current bus. The energy storage module includes a plurality of battery clusters and a plurality of first direct current-direct current converters. The battery cluster is configured to provide a direct current to the first direct current-direct current converter, or store a direct current transmitted by the first direct current-direct current converter. The first direct current-direct current converter is configured to: obtain requirement information of the battery cluster based on a status of the energy storage system and with reference to a voltage of the direct current bus or a duty cycle output by the first direct current-direct current converter, and is further configured to adjust a voltage value of the direct current provided by the battery cluster and transmit the voltage value to the direct current bus or adjust a voltage value of a direct current from the direct current bus and transmit the voltage value to the battery cluster.

## Description

### TECHNICAL FIELD

This application relates to the field of new energy technologies, and more specifically, to an energy storage system and a control method thereof in the field of new energy technologies.

### BACKGROUND

With rapid development of science and technology, energy storage technologies become an inevitable choice for future development of the power industry. An energy storage system may store a direct current from a grid (in other words, is charged), and when a load needs power, may further output a direct current (in other words, is discharged), and supply power to the load through the grid.

To implement power transmission between the energy storage system and the grid, a power conversion system (power conversion system, PCS) is usually used to control charging and discharging of an energy storage module in the energy storage system and to perform conversion between an alternating current and a direct current, so as to supply power to the load. However, in the power conversion system, a voltage level of the energy storage module cannot be flexibly matched.

Therefore, a technical solution in which the voltage level of the energy storage module can be flexibly matched is urgently needed.

### SUMMARY

This application provides an energy storage system and a control method thereof, so that a voltage level of an energy storage module in the energy storage system can be flexibly matched, and charging and discharging of the energy storage module can be effectively controlled based on a voltage of a direct current bus, to implement a high response speed.

According to a first aspect, this application provides an energy storage system. The energy storage system may include a plurality of energy storage modules, and each of the plurality of energy storage modules is connected to a direct current bus.

Optionally, the energy storage module may include a plurality of battery clusters and a plurality of first direct current-direct current converters, and the plurality of battery clusters and the plurality of first direct current-direct current converters may be connected in series in a one-to-one correspondence (in other words, connected in series in a one-to-one manner).

Optionally, one terminal of each first direct current-direct current converter may be configured to be connected to a corresponding battery cluster, and the other terminal of each first direct current-direct current converter may be configured to be connected to the direct current bus.

Based on the connection relationship, each first direct current-direct current converter may be configured to: obtain requirement information of the corresponding battery cluster based on a status of the energy storage system and with reference to a voltage of the direct current bus or a duty cycle output by the first direct current-direct current converter, and send the requirement information of the corresponding battery cluster to the corresponding battery cluster.

The requirement information of the battery cluster may include charging requirement information and discharging requirement information. The charging requirement information may be used to indicate information indicating that the battery cluster needs to store a direct current transmitted by the corresponding first direct current-direct current converter, and the discharging requirement information may be used to indicate information indicating that the battery cluster needs to provide a direct current for the corresponding first direct current-direct current converter.

Each battery cluster may be configured to: store, based on the charging requirement information, the direct current transmitted by the corresponding first direct current-direct current converter (in other words, the battery cluster is charged), or provide the direct current for the corresponding first direct current-direct current converter based on the discharging requirement information (in other words, the battery cluster is discharged).

Each first direct current-direct current converter may be further configured to: adjust a voltage value of a direct current from the direct current bus, and transmit the voltage value to the corresponding battery cluster; or adjust a voltage value of the direct current provided by the corresponding battery cluster, and transmit the voltage value to the direct current bus.

The first direct current-direct current converter in the energy storage system provided in this application may obtain the requirement information of the corresponding battery cluster based on the status of the energy storage system and with reference to the voltage of the direct current bus or the duty cycle output by the first direct current-direct current converter, and then based on the requirement information, the battery cluster stores the direct current transmitted by the corresponding first direct current-direct current converter or provides a direct current for the corresponding first direct current-direct current converter. In addition, the first direct current-direct current converter adjusts the voltage value of the direct current from the direct current bus, and transmits the voltage value to the corresponding battery cluster, or the first direct current-direct current converter adjusts the voltage value of the direct current provided by the battery cluster, and transmits the voltage value to the direct current bus. In this way, a voltage level of the energy storage module can be flexibly matched, and the voltage of the direct current bus can be adjusted, to maintain stability of the voltage of the direct current bus.

In a possible implementation, the status of the energy storage system may include an off state and an on state. Therefore, there may be the following two cases in which the first direct current-direct current converter obtains the requirement information of the battery cluster:

Case 1: When the energy storage system is in the off state, the first direct current-direct current converter may obtain the requirement information of the corresponding battery cluster based on the voltage of the direct current bus.

Further, when the voltage of the direct current bus is greater than a bus voltage reference value, the first direct current-direct current converter may obtain that the requirement information of the corresponding battery cluster is the charging requirement information. When the voltage of the direct current bus is less than or equal to a bus voltage reference value, the first direct current-direct current converter may obtain that the requirement information of the corresponding battery cluster is the discharging requirement information.

Case 2: When the energy storage system is in the on state, the first direct current-direct current converter may obtain the requirement information of the corresponding battery cluster based on the duty cycle output by the first direct current-direct current converter.

Further, when the duty cycle output by the first direct current-direct current converter is greater than 0, the first direct current-direct current converter may obtain that the requirement information of the corresponding battery cluster is the charging requirement information. When the duty cycle output by the first direct current-direct current converter is less than 0, the first direct current-direct current converter may obtain that the requirement information of the corresponding battery cluster is the discharging requirement information.

It should be noted that when the duty cycle output by the first direct current-direct current converter is equal to 0, the battery cluster corresponding to the first direct current-direct current converter has no charging requirement (that is, the battery cluster does not need to store the direct current transmitted by the corresponding first direct current-direct current converter, and the charging requirement corresponds to the charging requirement information) or discharging requirement (that is, the battery cluster does not need to provide a direct current for the corresponding first direct current-direct current converter, and the discharging requirement corresponds to the discharging requirement information). Therefore, the first direct current-direct current converter does not need to obtain the requirement information of the corresponding battery cluster.

Optionally, the duty cycle output by each first direct current-direct current converter may be obtained based on a duty cycle output by a voltage loop and a duty cycle output by a current loop in each first direct current-direct current converter.

The duty cycle output by the voltage loop may be obtained based on the bus voltage reference value of the battery cluster, and the duty cycle output by the current loop may be obtained based on a preset current limit of the battery cluster.

In a possible implementation, each first direct current-direct current converter may send the requirement information of the corresponding battery cluster to the battery cluster.

In a possible implementation, each battery cluster may include a plurality of battery packs and a plurality of battery management units. The plurality of battery packs are sequentially connected in series, and the plurality of battery management units are connected to the plurality of battery packs in a one-to-one correspondence.

Optionally, each battery management unit may be configured to: obtain a state of charge of a corresponding battery pack, and control the corresponding battery pack based on the received requirement information of the battery cluster, the status of the energy storage system, and the state of charge of the corresponding battery pack.

Each battery pack may be configured to: store, under control of the corresponding battery management unit, the direct current transmitted by the corresponding first direct current-direct current converter (in other words, the battery pack is charged), or provide a direct current for the corresponding first direct current-direct current converter (in other words, the battery pack is discharged).

In an example, when the energy storage system is in the off state and the requirement information of the battery cluster is the charging requirement information, each battery management unit cuts off a battery pack (including a battery pack in a fully charged state) whose state of charge is greater than a preset first state of charge threshold in the battery cluster, and cuts in another battery pack in the battery cluster.

In another example, when the energy storage system is in the off state and the requirement information of the battery cluster is the discharging requirement information, each battery management unit may cut off a battery pack (including a battery pack in a fully discharged state) whose state of charge is less than a preset second state of charge threshold in the battery cluster, and cut in another battery pack in the battery cluster.

In still another example, when the energy storage system is in the on state and the requirement information of the battery cluster is the charging requirement information, each battery management unit may cut off a battery pack (including a battery pack in a fully charged state) whose state of charge is greater than a first state of charge threshold in the battery cluster.

In yet another example, when the energy storage system is in the on state and the requirement information of the battery cluster is the discharging requirement information, each battery management unit may cut off a battery pack (including a battery pack in a fully discharged state) whose state of charge is less than a second state of charge threshold in the battery cluster.

The battery management unit in this application can accurately manage the battery pack based on the status of the energy storage system, the requirement information of the battery cluster, and the state of charge of the battery pack, to resolve a problem that states of charge and power of different battery packs are limited, so as to effectively manage the battery cluster. In other words, in this application, charging or discharging (namely, energy transfer) of the battery pack is implemented, and energy is transmitted without a charging/discharging instruction from an intelligent sub-array controller. Therefore, a response speed of the energy storage module (or the energy storage system) is increased, to implement fast energy scheduling.

Further, the battery cluster may further include a plurality of first switches and a plurality of second switches. Each of the plurality of first switches is connected in series to a corresponding battery pack, and then is connected in parallel to a corresponding second switch.

It may be learned that a quantity of battery management units, a quantity of battery packs, a quantity of first switches, and a quantity of second switches are equal.

The first switch and the second switch are disposed in the battery cluster provided in this application, to cut off and cut in the battery pack.

In a possible implementation, the energy storage system may further include a new energy module.

Optionally, the new energy module may include a plurality of photovoltaic modules and a plurality of second direct current-direct current converters, and the plurality of photovoltaic modules and the plurality of second direct current-direct current converters may be connected in series in a one-to-one correspondence. One terminal of each second direct current-direct current converter may be configured to be connected to a corresponding photovoltaic module, and the other terminal of each second direct current-direct current converter may be connected to the direct current bus.

Based on the connection relationship, each photovoltaic module may be configured to: convert solar energy into a direct current, and output the direct current to a corresponding second direct current-direct current converter; and
each second direct current-direct current converter may be configured to: adjust a voltage value of the direct current from the corresponding photovoltaic module, and transmit the voltage value to the direct current bus.

Optionally, the second direct current-direct current converter may include a boost circuit. Certainly, another circuit may be used for the second direct current-direct current converter. This is not limited in this application.

The second direct current-direct current converter in this application may directly adjust the voltage value of the direct current from the photovoltaic module, and transmit the voltage value to the direct current bus without a charging/discharging instruction from the intelligent sub-array controller. Therefore, a response speed of the new energy module (or the energy storage system) is increased, to implement fast energy scheduling.

In a possible implementation, the energy storage system provided in this application may further include a conversion module. One terminal of the conversion module may be configured to be connected to the direct current bus, and the other terminal of the conversion module may be configured to be connected to a grid.

Based on the connection relationship, the conversion module may be configured to: convert the direct current from the direct current bus into an alternating current, and transmit the alternating current to the grid, or convert an alternating current from the grid into a direct current, and transmit the direct current to the direct current bus.

Further, the conversion module may include at least one power converter.

Optionally, one terminal of the power converter may be configured to be connected to the direct current bus, and the other terminal of the power converter may be configured to be connected to the grid.

Based on the connection relationship, the power converter may be configured to: convert (which may be "rectify") the direct current (namely, the direct current from the first direct current-direct current converter) from the direct current bus into an alternating current, and transmit the alternating current to the grid, or convert (which may be "invert") the alternating current from the grid into a direct current, and transmit the direct current to the direct current bus.

In this application, the power converter can convert the direct current into an alternating current, and can further convert the alternating current from the grid into a direct current. In this way, voltage conversion and transmission are implemented, and the voltage of the direct current bus is controlled.

In conclusion, in the energy storage system (including the new energy module and the energy storage module, which may be referred to as a multi-energy complementary energy storage system) provided in this application, randomness of power generation by the new energy module can be suppressed, and a backup capacity of the battery cluster in the energy storage module does not need to be increased. In this way, maintenance of the energy storage module is facilitated, and configuration costs and maintenance costs of the energy storage system are reduced.

According to a second aspect, this application provides a control method for an energy storage system. The method may include:
a first direct current-direct current converter obtains requirement information of a battery cluster based on a status of the energy storage system and with reference to a voltage of a direct current bus or a duty cycle output by the first direct current-direct current converter, and sends the requirement information of the battery cluster to the battery cluster; and
the first direct current-direct current converter adjusts a voltage value of a direct current from the direct current bus, and transmits the voltage value to the corresponding battery cluster, and the battery cluster stores, based on charging requirement information, a direct current transmitted by the corresponding first direct current-direct current converter (in other words, the battery cluster is charged), or the battery cluster provides a direct current for the corresponding first direct current-direct current converter based on discharging requirement information (in other words, the battery cluster is discharged), and the first direct current-direct current converter adjusts a voltage value of the direct current provided by the battery cluster, and transmits the voltage value to the direct current bus.

The requirement information of the battery cluster may include the charging requirement information and the discharging requirement information. The charging requirement information may be used to indicate that the battery cluster needs to store the direct current transmitted by the corresponding first direct current-direct current converter, and the discharging requirement information may be used to indicate that the battery cluster needs to provide a direct current for the corresponding first direct current-direct current converter.

In the control method for an energy storage system provided in this application, the first direct current-direct current converter obtains the requirement information of the corresponding battery cluster based on the status of the energy storage system and with reference to the voltage of the direct current bus or the duty cycle output by the first direct current-direct current converter, and then based on the requirement information, the battery cluster stores the direct current transmitted by the corresponding first direct current-direct current converter or provides a direct current for the corresponding first direct current-direct current converter. In addition, the first direct current-direct current converter adjusts the voltage value of the direct current from the direct current bus, and transmits the voltage value to the corresponding battery cluster, or the first direct current-direct current converter adjusts the voltage value of the direct current provided by the battery cluster, and transmits the voltage value to the direct current bus. In this way, a voltage level of an energy storage module can be flexibly matched, and the voltage of the direct current bus can be adjusted, to maintain stability of the voltage of the direct current bus.

In a possible implementation, the status of the energy storage system may include an off state and an on state. Therefore, there may be the following two cases in which the first direct current-direct current converter obtains the requirement information of the battery cluster based on the status of the energy storage system and with reference to the voltage of the direct current bus or the duty cycle output by the first direct current-direct current converter, and sends the requirement information of the battery cluster to the battery cluster:
Case 1: When the energy storage system is in the off state, the first direct current-direct current converter may obtain the requirement information of the corresponding battery cluster based on the voltage of the direct current bus, and send the requirement information of the battery cluster to the battery cluster.

Further, when the energy storage system is in the off state and the voltage of the direct current bus is greater than a bus voltage reference value, the first direct current-direct current converter may obtain that the requirement information of the corresponding battery cluster is the charging requirement information. When the energy storage system is in the off state and the voltage of the direct current bus is less than or equal to a bus voltage reference value, the first direct current-direct current converter may obtain that the requirement information of the corresponding battery cluster is the discharging requirement information.

Case 2: When the energy storage system is in the on state, the first direct current-direct current converter may obtain the requirement information of the corresponding battery cluster based on the duty cycle output by the first direct current-direct current converter, and send the requirement information of the battery cluster to the battery cluster.

Further, when the energy storage system is in the on state and the duty cycle output by the first direct current-direct current converter is greater than 0, the first direct current-direct current converter may obtain that the requirement information of the corresponding battery cluster is the charging requirement information. When the energy storage system is in the on state and the duty cycle output by the first direct current-direct current converter is less than 0, the first direct current-direct current converter may obtain that the requirement information of the corresponding battery cluster is the discharging requirement information.

It should be noted that when the duty cycle output by the first direct current-direct current converter is equal to 0, the battery cluster corresponding to the first direct current-direct current converter has no charging requirement (that is, the battery cluster does not need to store the direct current transmitted by the corresponding first direct current-direct current converter, and the charging requirement corresponds to the charging requirement information) or discharging requirement (that is, the battery cluster does not need to provide a direct current for the corresponding first direct current-direct current converter, and the discharging requirement corresponds to the discharging requirement information). Therefore, the first direct current-direct current converter does not need to obtain the requirement information of the corresponding battery cluster.

Optionally, the duty cycle output by each first direct current-direct current converter may be obtained based on a duty cycle output by a voltage loop and a duty cycle output by a current loop in each first direct current-direct current converter.

The duty cycle output by the voltage loop may be obtained based on the bus voltage reference value of the battery cluster, and the duty cycle output by the current loop may be obtained based on a preset current limit of the battery cluster.

In a possible implementation, each battery cluster may include a plurality of battery packs and a plurality of battery management units. The plurality of battery packs are sequentially connected in series, and the plurality of battery management units are connected to the plurality of battery packs in a one-to-one correspondence.

Therefore, in an example, the battery cluster may store, based on the charging requirement information in the following process, the direct current transmitted by the corresponding first direct current-direct current converter:

The battery management unit obtains a state of charge of the battery pack, and controls the battery pack (in other words, the battery management unit controls charging of the battery pack) based on the charging requirement information, the status of the energy storage system, and the state of charge of the battery pack; and the battery pack stores, under control of the battery management unit, the direct current transmitted by the corresponding first direct current-direct current converter.

Further, when the energy storage system is in the off state and the requirement information of the battery cluster is the charging requirement information, the battery management unit may cut off a battery pack (including a battery pack in a fully charged state) whose state of charge is greater than a preset first state of charge threshold in the battery cluster, and cut in another battery pack in the battery cluster; or when the energy storage system is in the on state and the requirement information of the battery cluster is the charging requirement information, the battery management unit cuts off a battery pack whose state of charge is greater than a first state of charge threshold in the battery cluster.

In another example, the battery cluster may provide a direct current for the corresponding first direct current-direct current converter based on the discharging requirement information in the following process:
The battery management unit obtains a state of charge of the battery pack, and controls the battery pack (in other words, the battery management unit controls discharging of the battery pack) based on the discharging requirement information, the status of the energy storage system, and the state of charge of the battery pack; and the battery pack provides a direct current for the corresponding first direct current-direct current converter under control of the battery management unit.

Further, when the energy storage system is in the off state and the requirement information of the battery cluster is the discharging requirement information, the battery management unit may cut off a battery pack (including a battery pack in a fully discharged state) whose state of charge is less than a preset second state of charge threshold in the battery cluster, and cut in another battery pack in the battery cluster; or when the energy storage system is in the on state and the requirement information of the battery cluster is the discharging requirement information, the battery management unit cuts off a battery pack whose state of charge is less than a second state of charge threshold in the battery cluster.

In this application, the battery pack can be accurately managed based on the status of the energy storage system, the requirement information of the battery cluster, and the state of charge of the battery pack, to resolve a problem that states of charge and power of different battery packs are limited, so as to effectively manage the battery cluster. In other words, in this application, charging or discharging (namely, energy transfer) of the battery pack is implemented, and energy is transmitted without a charging/discharging instruction from an intelligent sub-array controller. Therefore, a response speed of the energy storage module (or the energy storage system) is increased, to implement fast energy scheduling.

In a possible implementation, the battery cluster may further include a plurality of first switches and a plurality of second switches. Each of the plurality of first switches is connected in series to a corresponding battery pack, and then is connected in parallel to a corresponding second switch.

It may be learned that a quantity of battery management units, a quantity of battery packs, a quantity of first switches, and a quantity of second switches are equal.

Further, the first switch may be controlled to be closed and the second switch may be controlled to be open, to cut in the battery pack. Similarly, the second switch may be controlled to be closed and the first switch may be controlled to be open, to cut off the battery pack.

In a possible implementation, the energy storage system may further include a new energy module. The new energy module may include a plurality of photovoltaic modules and a plurality of second direct current-direct current converters (each second direct current-direct current converter may include a boost converter), and the plurality of photovoltaic modules and the plurality of second direct current-direct current converters may be connected in series in a one-to-one correspondence. One terminal of each second direct current-direct current converter may be configured to be connected to a corresponding photovoltaic module, and the other terminal of each second direct current-direct current converter may be connected to the direct current bus.

The photovoltaic module may convert solar energy into a direct current, and output the direct current to a corresponding second direct current-direct current converter, and the second direct current-direct current converter may adjust a voltage value of the direct current from the corresponding photovoltaic module, and transmit the voltage value to the direct current bus.

The second direct current-direct current converter in this application may directly adjust the voltage value of the direct current from the photovoltaic module, and transmit the voltage value to the direct current bus without a charging/discharging instruction from the intelligent sub-array controller. Therefore, a response speed of the new energy module (or the energy storage system) is increased, to implement fast energy scheduling.

In a possible implementation, a conversion module (one terminal of the conversion module may be configured to be connected to the direct current bus, and the other terminal of the conversion module may be configured to be connected to a grid) in the energy storage system may convert the direct current from the direct current bus into an alternating current, and transmit the alternating current to the grid, or convert an alternating current from the grid into a direct current, and transmit the direct current to the direct current bus.

Further, at least one power converter (one terminal of each power converter may be connected to the direct current bus, and the other terminal of each power converter may be connected to the grid) in the conversion module may convert (which may be "rectify") the direct current that is transmitted by the direct current bus and that is from the first direct current-direct current converter into an alternating current, and transmit the alternating current to the grid, or convert (which may be "invert") the alternating current from the grid into a direct current, and transmit the direct current to the direct current bus.

In this application, the power converter can convert the direct current into an alternating current, and can further convert the alternating current from the grid into a direct current. In this way, voltage conversion and transmission are implemented, and the voltage of the direct current bus is controlled.

In conclusion, in the control method for an energy storage system provided in this application, randomness of power generation by the new energy module can be suppressed, and a backup capacity of the battery cluster in the energy storage module does not need to be increased. In this way, maintenance of the energy storage module is facilitated, and configuration costs and maintenance costs of the energy storage system are reduced.

It should be understood that technical solutions in the second aspect of this application are consistent with those in the first aspect of this application, and beneficial effects achieved by the aspects and the corresponding feasible implementations are similar. Details are not described.

### BRIEF DESCRIPTION OF DRAWINGS

FIG. 1 is a schematic diagram of a structure of an energy storage system according to an embodiment of this application;
FIG. 2 is a schematic diagram of a structure of an energy storage system according to an embodiment of this application;
FIG. 3 is a schematic diagram of a structure of a battery cluster BC according to an embodiment of this application;
FIG. 4 is a schematic diagram of a structure of a direct current-direct current converter according to an embodiment of this application;
FIG. 5 is a schematic flowchart of a control process for a direct current-direct current converter according to an embodiment of this application;
FIG. 6 is a schematic diagram of a structure of an energy storage system according to an embodiment of this application;
FIG. 7 is a schematic diagram in which a plurality of energy storage systems are connected to a grid according to an embodiment of this application; and
FIG. 8 is a schematic flowchart of a control method for an energy storage system according to an embodiment of this application.

### DESCRIPTION OF EMBODIMENTS

The following describes technical solutions of this application with reference to the accompanying drawings.

To make the objectives, technical solutions, and advantages of embodiments of this application clearer, the following clearly describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

Terms such as "first" and "second" in the specification, embodiments, claims, and accompanying drawings of this application are merely used for distinction and description, and cannot be understood as an indication or implication of relative importance, or cannot be understood as an indication or implication of a sequence. In addition, terms "include", "comprise", and any other variants thereof are intended to cover non-exclusive inclusion. For example, a series of steps or units are included. A method, system, product, or device is not necessarily limited to those steps or units that are expressly listed, and may include another step or unit that is not expressly listed or that is inherent to such a process, method, product, or device.

It should be understood that in this application, "at least one" means one or more, and "a plurality of' means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between associated objects. At least one of the following items (pieces) or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

With rapid development of science and technology, energy storage technologies (mainly embodied in an energy storage system) become an inevitable choice for future development of the power industry. The energy storage system may store a direct current from a grid (in other words, the energy storage system is charged), and when a load needs power, may further output a direct current (in other words, the energy storage system is discharged), and supply power to the load through the grid.

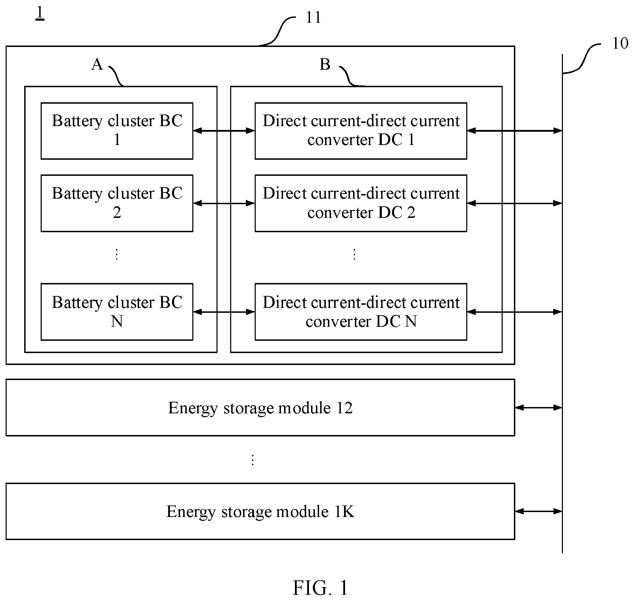

To flexibly match a voltage level of an energy storage module in the energy storage system, an embodiment of this application provides an energy storage system, as shown in FIG. 1. The energy storage system 1 may include K energy storage modules (an energy storage module 11, an energy storage module 12, ..., and an energy storage module IN in FIG. 1). Each of the energy storage module 11, the energy storage module 12, ..., and the energy storage module IN is connected to a direct current bus 10.

Referring to FIG. 1, each energy storage module (for example, the energy storage module 11) may include N battery clusters A (namely, a battery cluster (battery cluster, BC) 1, a battery cluster BC 2, ..., and a battery cluster BC N in FIG. 1) and N direct current-direct current converters B (namely, N first direct current-direct current converters, including a direct current-direct current converter DC (direct current) 1, a direct current-direct current converter DC 2, ..., and a direct current-direct current converter DC N in FIG. 1). The N battery clusters and the N direct current-direct current converters may be connected in series in a one-to-one correspondence.

For example, the battery cluster BC 1 may be correspondingly connected in series to the direct current-direct current converter DC 1.

For another example, the battery cluster BC 2 may be correspondingly connected in series to the direct current-direct current converter DC 2.

For still another example, a battery cluster BC 3 may be correspondingly connected in series to the direct current-direct current converter DC N.

Still referring to FIG. 1, one terminal of each of the N direct current-direct current converters is configured to be connected to a corresponding battery cluster, and the other terminal of each direct current-direct current converter is configured to be connected to the direct current bus 10.

For example, one terminal of the direct current-direct current converter DC 1 is connected to the battery cluster BC 1, and the other terminal of the direct current-direct current converter DC 1 is connected to the direct current bus 10.

For another example, one terminal of the direct current-direct current converter DC 2 is connected to the battery cluster BC 2, and the other terminal of the direct current-direct current converter DC 2 is connected to the direct current bus 10.

For still another example, one terminal of the direct current-direct current converter DC N is connected to the battery cluster BC N, and the other terminal of the direct current-direct current converter DC N is connected to the direct current bus 10.

Based on the connection relationship, each direct current-direct current converter may be configured to: obtain requirement information of the corresponding battery cluster based on a status (which may include an off state and an on state (the on state may include a running state and a standby state) of the energy storage system 1) of the energy storage system 1 and with reference to a voltage of the direct current bus 10 or a duty cycle output by the direct current-direct current converter, and send the requirement information of the corresponding battery cluster to the corresponding battery cluster.

For example, the direct current-direct current converter DC 1 may be configured to: obtain requirement information of the battery cluster BC 1 based on the status of the energy storage system 1 and with reference to the voltage of the direct current bus 10 or a duty cycle output by the direct current-direct current converter DC 1, and send the requirement information of the battery cluster BC 1 to the battery cluster BC 1.

Each battery cluster may be configured to: store, based on charging requirement information, a direct current transmitted by the corresponding direct current-direct current converter (in other words, the battery cluster is charged), or provide a direct current for the corresponding direct current-direct current converter based on discharging requirement information (in other words, the battery cluster is discharged).

For example, the battery cluster BC 1 may store, based on the charging requirement information, a direct current transmitted by the direct current-direct current converter DC 1 (in other words, the battery cluster BC 1 is charged), or the battery cluster BC 1 may provide a direct current for the direct current-direct current converter DC 1 based on the discharging requirement information (in other words, the battery cluster BC 1 is discharged).

Each direct current-direct current converter may be further configured to: adjust a voltage value of a direct current from the direct current bus, and transmit the voltage value to the corresponding battery cluster; or adjust a voltage value of the direct current provided by the corresponding battery cluster, and transmit the voltage value to the direct current bus.

For example, the direct current-direct current converter DC 1 may adjust the voltage value of the direct current transmitted from the direct current bus 10, and transmit the voltage value to the battery cluster BC 1, or the direct current-direct current converter DC 1 may adjust a voltage value of the direct current provided by the battery cluster BC 1, and transmit the voltage value to the direct current bus 10.

Optionally, the requirement information of the battery cluster may include the charging requirement information and the discharging requirement information.

The charging requirement information corresponds to a charging requirement, the charging requirement information may be used to indicate information indicating that the battery cluster needs to store the direct current transmitted by the corresponding direct current-direct current converter, and the charging requirement is used to indicate that the battery cluster needs to store the direct current transmitted by the corresponding direct current-direct current converter.

The discharging requirement information corresponds to a discharging requirement, and the discharging requirement information may be used to indicate information indicating that the battery cluster needs to provide a direct current for the corresponding direct current-direct current converter.

The direct current-direct current converter in the energy storage system provided in this embodiment of this application may obtain the requirement information of the corresponding battery cluster based on the status of the energy storage system and with reference to the voltage of the direct current bus or the duty cycle output by the direct current-direct current converter, and then based on the requirement information, the battery cluster stores the direct current transmitted by the corresponding direct current-direct current converter or provides a direct current for the corresponding direct current-direct current converter. In addition, the direct current-direct current converter adjusts the voltage value of the direct current from the direct current bus, and transmits the voltage value to the corresponding battery cluster, or the direct current-direct current converter adjusts the voltage value of the direct current provided by the battery cluster, and transmits the voltage value to the direct current bus. In this way, a voltage level of the energy storage module in the energy storage system can be flexibly matched by using the direct current-direct current converter connected to the battery cluster, and the voltage value of the direct current provided by the battery cluster is adjusted by using the direct current-direct current converter. In addition, the voltage of the direct current bus can be adjusted, to maintain stability of the voltage of the direct current bus and increase a response speed of the battery cluster.

Optionally, each direct current-direct current converter may be connected to an intelligent sub-array controller. The direct current-direct current converter may adjust, based on a bus voltage reference value of the battery cluster that is calculated by the intelligent sub-array controller based on a state of charge of the battery cluster and a power scheduling instruction, the voltage value of the direct current provided by the battery cluster, to control the voltage of the direct current bus, so that the voltage of the direct current bus remains stable.

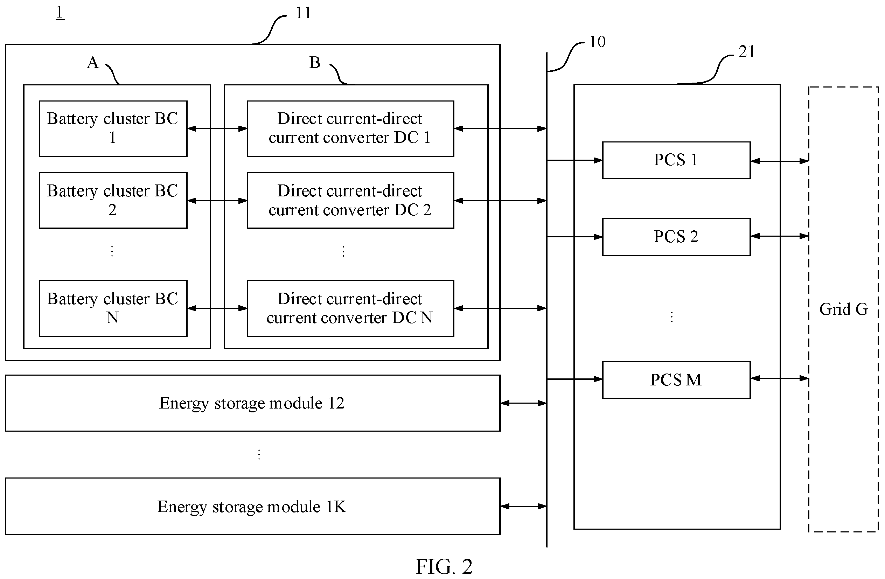

In a possible implementation, as shown in FIG. 2, the energy storage system 1 provided in this embodiment of this application may further include a conversion module 21. One terminal of the conversion module 21 is configured to be connected to the direct current bus 10, and the other terminal of the conversion module 21 is configured to be connected to a grid.

Based on the connection relationship, the conversion module 21 may convert (in other words, invert) the direct current from the direct current bus 10 into an alternating current, and transmit the alternating current to the grid G (grid), or convert (in other words, rectify) an alternating current from the grid G into a direct current, and transmit the direct current to the direct current bus 10.

Further, as shown in FIG. 2, the conversion module 21 may include M power converters (which may also be referred to as power conversion systems PCSs, namely, a power converter PCS 1, a power converter PCS 2, ..., and a power converter PCS M in FIG. 2). One terminal of each power converter is connected to the direct current bus 10, and the other terminal of each power converter is connected to the grid G.

Based on the connection relationship, the power converter (namely, any one of the M power converters) may convert the direct current transmitted by the direct current bus 10 into an alternating current, and transmit the alternating current to the grid G, or the power converter (namely, any one of the M power converters) may convert the alternating current from the grid G into a direct current, and transmit the direct current to the direct current bus 10.

In this embodiment of this application, the power converter can convert the direct current into an alternating current, and can further convert the alternating current from the grid into a direct current. In addition, the power converter can control power of the power converter by using a power reference value of the power converter that is obtained by the intelligent sub-array controller based on the power scheduling instruction, the state of charge of the battery cluster, and the like, to control the voltage of the direct current bus.

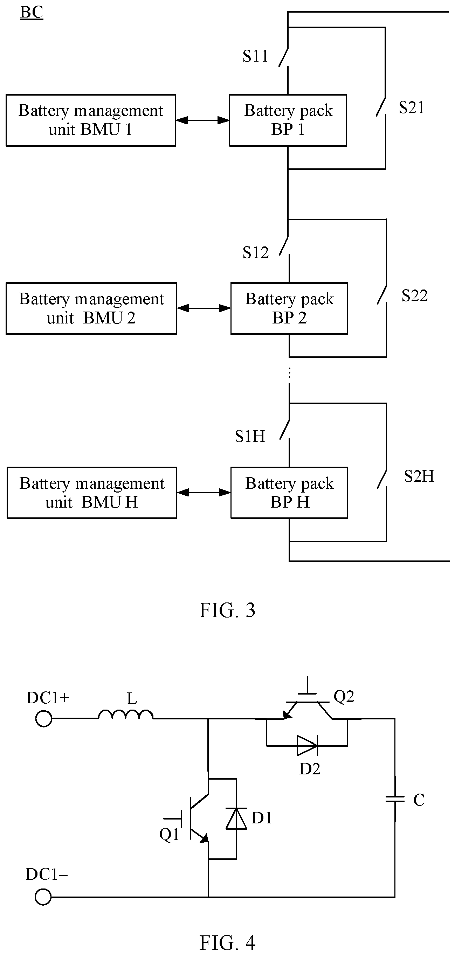

In a possible implementation, as shown in FIG. 3, the battery cluster BC (for example, the battery cluster BC 1) may include H battery packs (namely, a battery pack (battery pack, BP) 1, a battery pack BP 2, ..., and a battery pack BP H in FIG. 3, where there are a total of H battery packs) sequentially connected in series and H battery management units (namely, a battery management unit (battery management unit, BMU) 1, a battery management unit BMU 2, ..., and a battery management unit BMU H in FIG. 3).

Optionally, the H battery management units are connected to the H battery packs in a one-to-one correspondence.

For example, the battery management unit BMU 1 is correspondingly connected to the battery pack BP 1.

For another example, the battery management unit BMU 2 is correspondingly connected to the battery pack BP 2.

For still another example, the battery management unit BMU H is correspondingly connected to the battery pack BP H.

Based on the connection relationship, the battery management unit may obtain a state of charge of a corresponding battery pack, and control the corresponding battery pack based on the requirement information (which may include charging requirement information and discharging requirement information) of the battery cluster from the corresponding direct current-direct current converter, the status (which may include the off state and the on state) of the energy storage system, and the state of charge of the battery pack.

For example, the battery management unit BMU 1 may obtain a state of charge (state of charge, SOC) of the battery pack BP 1, and control the battery pack BP 1 (in other words, control charging or discharging of the battery pack BP 1) based on requirement information (which may include charging requirement information and discharging requirement information of the battery pack BP 1) of the battery pack BP 1 from the direct current-direct current converter DC 1, the status of the energy storage system 1, and the state of charge of the battery pack BP 1.

The battery pack may store, under control of the corresponding battery management unit, the direct current transmitted by the corresponding direct current-direct current converter (in other words, the battery pack is charged), or provide a direct current for the corresponding direct current-direct current converter (in other words, the battery pack is discharged).

For example, the battery pack BP 1 may store, under control of the battery management unit BMU 1, the direct current transmitted by the direct current-direct current converter DC 1 (in other words, the battery pack BP 1 is charged), or provide a direct current for the direct current-direct current converter DC 1 (in other words, the battery pack BP 1 is discharged).

Further, as shown in FIG. 3, the battery cluster BC 1 may further include a plurality of series switches (namely, first switches, namely, a series switch S11, a series switch S12, ..., and a series switch S1H in FIG. 3, where there are a total of H series switches) and a plurality of bypass switches (namely, second switches, namely, a bypass switch S21, a bypass switch S22, ..., and a bypass switch S2H in FIG. 3, where there are a total of H bypass switches).

Optionally, the battery pack is connected in series to the series switch, and then is connected in parallel to the bypass switch.

For example, the battery pack BP 1 is connected in series to the series switch S11, and then is connected in parallel to the bypass switch S21.

For another example, the battery pack BP 2 is connected in series to the series switch S12, and then is connected in parallel to the bypass switch S22.

For still another example, the battery pack BP H is connected in series to the series switch S1H, and then is connected in parallel to the bypass switch S2H.

The series switch and the bypass switch are disposed in the battery cluster provided in this embodiment of this application, to cut off and cut in the battery pack. In addition, the battery management unit effectively manages the battery pack by using the state of charge of the battery pack, the requirement information of the battery pack, and the status of the energy storage system.

In a possible implementation, the direct current-direct current converter DC 1 and the battery cluster BC 1 are used as examples. The direct current-direct current converter DC 1 may include an inductor L (used for filtering), a power transistor Q1, a diode D1, a power transistor Q2, a diode D2, and a capacitor C (used for filtering), as shown in FIG. 4. In FIG. 4, DC1+ represents a direct current positive terminal of the direct current-direct current converter DC 1, DC1- represents a direct current negative terminal of the direct current-direct current converter DC 1, and the direct current-direct current converter DC 1 is connected to the battery cluster BC 1 by using the direct current positive terminal DC1+ and the direct current negative terminal DC1-.

It should be noted that each of the power transistor Q1 and the power transistor Q2 in FIG. 4 is described by using an insulated gate bipolar transistor (insulated gate bipolar transistor, IGBT) as an example. Certainly, a power device such as a metal-oxide-semiconductor field-effect transistor (metal-oxide-semiconductor field-effect transistor, MOSFET, which may be referred to as a MOS transistor) may be used for each of the power transistor Q1 and the power transistor Q2. Types of the power transistor Q1 and the power transistor Q2 are not limited in this embodiment of this application.

Referring to FIG. 4, the diode D1 and the power transistor Q1 are connected in parallel and are in opposite directions (which may be considered as power transistors in two directions). Similarly, the diode D2 and the power transistor Q2 are connected in parallel and are in opposite directions (which may also be considered as power transistors in two directions). A first terminal of the inductor L is connected to the direct current positive terminal DC1+, and a second terminal of the inductor L is connected to an emitter of the power transistor Q2. A collector of the power transistor Q2 is connected to one terminal of the capacitor C, and the other terminal of the capacitor C is connected to the direct current negative terminal DC1-. The collector of the power transistor Q2 is connected to the second terminal of the inductor L, and the emitter of the power transistor Q2 is connected to the direct current negative terminal DC1-.

Based on the connection relationship, when the battery cluster BC 1 is charged, the direct current-direct current converter DC 1 may send a drive signal to the power transistor Q2 based on the duty cycle output by the direct current-direct current converter DC 1 (the duty cycle output by the direct current-direct current converter DC 1 may be represented by D_{ref}, and may be understood as a duty cycle output by a loop (namely, a voltage loop (voltage loop, VL) and a current loop (current loop, CL)) in the direct current-direct current converter DC 1), to drive the power transistor Q2 to operate (that is, to be conducted or cut off). When the battery cluster BC 1 is discharged, the direct current-direct current converter DC 1 does not send a drive signal to the power transistor Q2 (in other words, driving force is 0). Similarly, when the battery cluster BC 1 is discharged, the direct current-direct current converter DC 1 may send a drive signal to the power transistor Q1 based on the duty cycle D_{ref} output by the direct current-direct current converter DC 1, to drive the power transistor Q1 to operate (that is, to be conducted or cut off). When the battery cluster BC 1 is charged, the direct current-direct current converter DC 1 does not send a drive signal to the power transistor Q1 (in other words, driving force is 0).

In a possible implementation, the direct current-direct current converter DC 1 and the battery cluster BC 1 are still used as examples, and the direct current-direct current converter DC 1 obtains the requirement information of the battery cluster BC 1 in the following process:

When the energy storage system is in the off state, the direct current-direct current converter DC 1 may obtain the requirement information of the battery cluster BC 1 based on the voltage of the direct current bus. When the energy storage system is in the on state, the direct current-direct current converter DC 1 may obtain the requirement information of the battery cluster BC 1 based on the duty cycle D_{ref} output by the direct current-direct current converter DC 1.

Further, the direct current-direct current converter DC 1 sends the requirement information of the battery cluster BC 1 to the battery cluster BC 1.

Optionally, after the battery cluster BC 1 receives the charging requirement information from the direct current-direct current converter DC 1, the battery cluster BC 1 stores the direct current transmitted by the direct current-direct current converter DC 1 (in other words, the battery cluster BC 1 is charged). After the battery cluster BC 1 receives the discharging requirement information from the direct current-direct current converter DC 1, the battery cluster BC 1 provides a direct current for the direct current-direct current converter DC 1 (in other words, the battery cluster BC 1 is discharged).

In an example, when the energy storage system is in the off state, the direct current-direct current converter DC 1 may obtain the requirement information of the battery cluster based on the voltage of the direct current bus. Therefore, there are the following two cases:

When the voltage of the direct current bus is greater than the bus voltage reference value (the bus voltage reference value is obtained by the intelligent sub-array controller based on the power scheduling instruction, the state of charge of the battery cluster, and the like), the direct current-direct current converter DC 1 may obtain that the requirement information of the battery cluster BC 1 is the charging requirement information. When the voltage of the direct current bus is less than or equal to the bus voltage reference value, the direct current-direct current converter DC 1 may obtain that the requirement information of the battery cluster BC 1 is the discharging requirement information.

In another example, when the energy storage system is in the on state, the direct current-direct current converter DC 1 may obtain the requirement information of the battery cluster based on the duty cycle D_{ref} output by the direct current-direct current converter. Therefore, there are the following two cases:

When the duty cycle D_{ref} output by the direct current-direct current converter DC 1 is greater than 0, the direct current-direct current converter DC 1 may obtain that the requirement information of the battery cluster BC 1 is the charging requirement information.

When the duty cycle D_{ref} output by the direct current-direct current converter DC 1 is less than 0, the direct current-direct current converter DC 1 may obtain that the requirement information of the battery cluster BC 1 is the discharging requirement information.

It should be noted that when the duty cycle D_{ref} output by the direct current-direct current converter DC 1 is equal to 0, the battery cluster BC 1 has no charging requirement (that is, the battery cluster BC 1 does not need to store the direct current transmitted by the direct current-direct current converter DC 1, and the charging requirement corresponds to the charging requirement information) or discharging requirement (that is, the battery cluster BC 1 does not need to provide a direct current for the direct current-direct current converter DC 1, and the discharging requirement corresponds to the discharging requirement information). Therefore, the direct current-direct current converter DC 1 does not need to obtain the requirement information of the battery cluster BC 1.

With reference to the foregoing example, it may be understood that the direct current-direct current converter DC 1 may obtain, based on the status of the energy storage system, that the requirement information of the battery cluster BC 1 is the charging requirement information or the discharging requirement information. After obtaining the requirement information of the battery cluster BC 1, the direct current-direct current converter DC 1 may send the requirement information of the battery cluster BC 1 to the battery management unit (namely, the battery management unit BMU 1 to the battery management unit BMU H in FIG. 3) in the battery cluster BC 1.

Certainly, in this embodiment of this application, description is provided by using the direct current-direct current converter DC 1 as an example. For another direct current-direct current converter (namely, the direct current-direct current converter DC 2 to the direct current-direct current converter DC N in FIG. 1) in the energy storage module, refer to the direct current-direct current converter DC 1. Details are not described in this embodiment of this application.

Optionally, the duty cycle (which may be represented by D_{ref}) output by the direct current-direct current converter DC 1 may be obtained based on a duty cycle (which may be represented by D_{bus_ref}) output by the voltage loop VL and a duty cycle (which may be represented by D_{i_ref}) output by the current loop CL in the direct current-direct current converter (for example, the direct current-direct current converter DC 1).

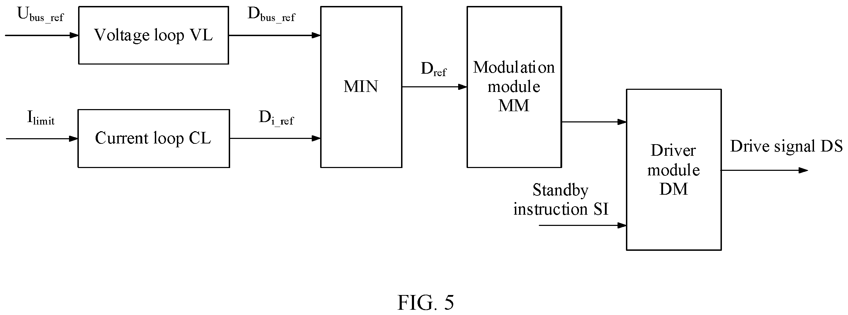

For example, as shown in FIG. 5, a minimum value (namely, MIN (minimum) in FIG. 5) in the duty cycle D_{bus_ref} output by the voltage loop and the duty cycle D_{i__ref} output by the current loop may be selected as the duty cycle D_{ref} output by the direct current-direct current converter DC 1.

Referring to FIG. 5, the duty cycle D_{bus_ref} output by the voltage loop VL may be obtained based on the bus voltage reference value (which may be represented by U_{bus_ref}) of the battery cluster, and the duty cycle D_{i_ref} output by the current loop CL may be obtained based on a preset current limit (which may be represented by Iₗᵢₘᵢₜ) of the battery cluster.

Further, still referring to FIG. 5, modulation (for example, pulse width modulation (pulse width modulation, PWM)) may be performed on the output duty cycle D_{ref} by using a modulation module (modulation module, MM) in the direct current-direct current converter DC 1, to obtain a drive pulse (drive pulse, DP).

In an example, if a driver module (driver module, DM) in the direct current-direct current converter DC 1 does not receive a standby instruction (standby instruction, SI) sent by the battery management unit (which may be any one of the battery management unit BMU 1 to the battery management unit BMU H) in the battery cluster BC 1, the driver module DM may send a drive signal (drive signal, DS) to a corresponding power transistor (namely, the power transistor Q1 or the power transistor Q2) based on the drive pulse DP.

Optionally, when the output duty cycle D_{ref} is greater than 0, the driver module DM sends the drive signal DS to the power transistor Q2, to conduct the power transistor Q2. When the output duty cycle D_{ref} is less than 0, the driver module DM sends the drive signal DS to the power transistor Q1, to conduct the power transistor Q1.

It should be noted that when the output duty cycle D_{ref} is equal to 0, the battery cluster BC 1 has no charging requirement or discharging requirement. Therefore, the direct current-direct current converter DC 1 does not need to obtain the requirement information of the battery cluster BC 1, and the driver module DM does not need to send the drive signal DS to the power transistor Q1 or the power transistor Q2.

In another example, if a driver module DM receives a standby instruction SI sent by the battery management unit (which may be any one of the battery management unit BMU 1 to the battery management unit BMU H) in the battery cluster BC 1, the driver module DM no longer sends a drive signal DS to a power transistor (for example, the power transistor Q1 and the power transistor Q2) in the direct current-direct current converter DC 1 based on the drive pulse DP and the standby instruction SI. Therefore, all power transistors (for example, the power transistor Q1 and the power transistor Q2) in the direct current-direct current converter DC 1 are closed and are in a cutoff state.

It should be noted that the standby instruction SI may be used to indicate that the energy storage system needs to be in the standby state. That is, the energy storage system (or the battery pack in the battery cluster) no longer needs to continue to be charged or discharged, and the battery management unit needs to send the standby instruction SI to the driver module DM.

In a possible implementation, based on the status of the energy storage system, the battery management unit BMU 1 may manage the battery cluster (for example, the battery cluster BC 1) based on the requirement information sent by the direct current-direct current converter DC 1 (which may be understood as that the battery management unit BMU 1 may manage the battery pack BP 1 to the battery pack BP H based on the requirement information sent by the direct current-direct current converter DC 1). Specifically, there are the following two cases:

Case 1 in which the energy storage system is in the off state:
When the requirement information of the battery cluster is the charging requirement information, the battery management unit BMU 1 may cut off a battery pack whose state of charge is greater than a preset first state of charge threshold (for example, 95%) in the battery cluster BC 1 (which may be understood as that the battery management unit BMU 1 cuts off a battery pack in a fully charged state (namely, a fully charged battery pack) in the battery cluster), and cut in another battery pack in the battery cluster BC 1, to charge the battery pack that is cut in.
When the requirement information of the battery cluster is the discharging requirement information, the battery management unit BMU 1 may cut off a battery pack whose state of charge is less than a preset second state of charge threshold (for example, 5%) in the battery cluster BC 1 (which may be understood as that the battery management unit BMU 1 cuts off a battery pack in a fully discharged state (namely, a fully discharged battery pack) in the battery cluster), and cut in another battery pack in the battery cluster BC 1, to discharge the battery pack that is cut in.

It should be noted that if the energy storage system is in the off state and the requirement information of the battery cluster BC 1 neither indicates that the battery cluster BC 1 needs to be charged nor indicates that the battery cluster BC 1 needs to be discharged, in other words, the requirement information of the battery cluster BC 1 is not clear, the battery pack in the battery cluster BC 1 needs to be managed in a preset management manner.

For example, a battery pack with a relatively high state of charge (for example, a battery pack with a state of charge greater than 60%) may be preferably selected for discharge. However, if there are a relatively small quantity of battery packs with a relatively high state of charge and normal running of the energy storage system is affected if the battery pack with a relatively high state of charge is selected for discharge, a battery pack with a relatively low state of charge (for example, a battery pack with a state of charge less than 40%) may be selected for charging.

Case 2 in which the system is in the on state:
When the requirement information of the battery cluster is the charging requirement information, the battery management unit BMU 1 may cut off a battery pack whose state of charge is greater than a first state of charge threshold (for example, 95%) in the battery cluster BC 1.
When the requirement information of the battery cluster is the discharging requirement information, the battery management unit BMU 1 may cut off a battery pack whose state of charge is less than a second state of charge threshold (for example, 5%) in the battery cluster BC 1.

The battery management unit in this embodiment of this application can accurately manage the battery pack based on the status of the energy storage system, the requirement information of the battery cluster, and the state of charge of the battery pack, to resolve a problem that states of charge and power of different battery packs are limited, so as to effectively manage the battery cluster. In other words, in this embodiment of this application, charging or discharging (namely, energy transfer) of the battery pack is implemented, and energy is transmitted without a charging/discharging instruction from the intelligent sub-array controller. Therefore, a response speed of the energy storage module (or the energy storage system) is increased, to implement fast energy scheduling.

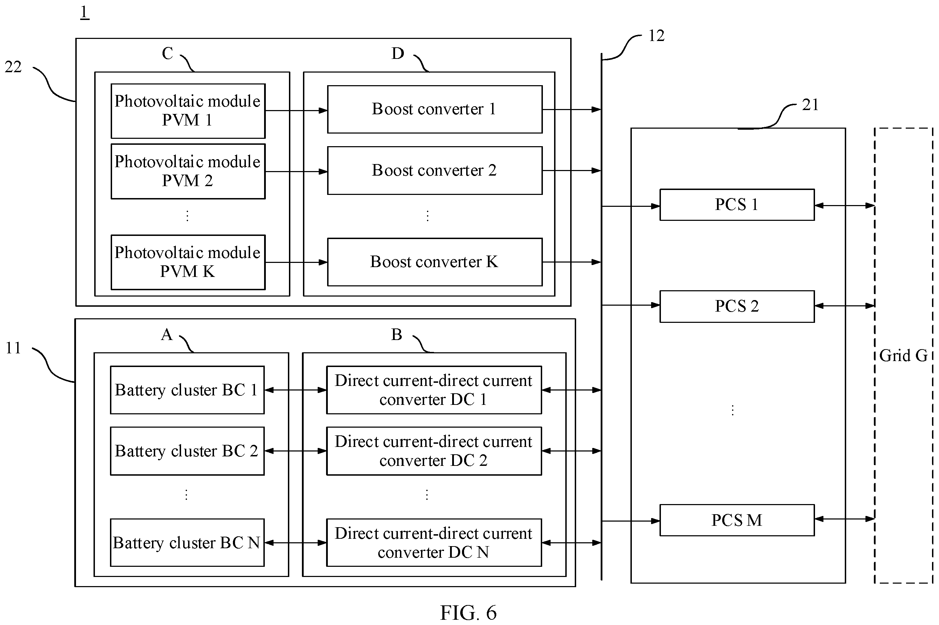

In a possible implementation, based on FIG. 1, as shown in FIG. 6, the energy storage system 1 provided in this embodiment of this application may further include a new energy module 22. There may be one or more new energy modules 22. In this embodiment of this application, description is provided by using one new energy module as an example.

Referring to FIG. 6, the new energy module 22 may include a plurality of photovoltaic modules C (including a photovoltaic module (photovoltaic module, PVM) 1, a photovoltaic module PVM 2, ..., and a photovoltaic module PVM K in FIG. 6, where there are a total of K photovoltaic modules) and a plurality of boost converters D (namely, a plurality of second direct current-direct current converters, including a boost converter 1, a boost converter 2, ..., and a boost converter K in FIG. 6, where there are a total of K boost converters).

It should be noted that an output voltage of the photovoltaic module is relatively low, and therefore voltage boost is usually required to connect to the direct current bus 10. The second direct current-direct current converter may boost the output voltage of the photovoltaic module by using a boost circuit. Therefore, the second direct current-direct current converter is referred to as a boost converter.

The plurality of photovoltaic modules and the plurality of boost converters are connected in series in a one-to-one correspondence.

For example, the plurality of photovoltaic modules PVMs 1 are correspondingly connected in series to the boost converter 1.

For another example, the plurality of photovoltaic modules PVMs 2 are correspondingly connected in series to the boost converter 2.

For still another example, the plurality of photovoltaic modules PVMs K are correspondingly connected in series to the boost converter K.

Optionally, one terminal of the boost converter is connected to a corresponding photovoltaic module, and the other terminal of the boost converter is connected to the direct current bus 10.

For example, one terminal of the boost converter 1 is connected to the photovoltaic module PVM 1, and the other terminal of the boost converter 1 is connected to the direct current bus 10.

For another example, one terminal of the boost converter 2 is connected to the photovoltaic module PVM 2, and the other terminal of the boost converter 2 is connected to the direct current bus 10.

For still another example, one terminal of the boost converter K is connected to the photovoltaic module PVM K, and the other terminal of the boost converter K is connected to the direct current bus 10.

Based on the connection relationship, the photovoltaic module (for example, the photovoltaic module PVM 1) may be configured to: convert solar energy into a direct current, and output the direct current to the corresponding boost converter (for example, the boost converter 1).

The boost converter (for example, the boost converter 1) may be configured to: adjust a voltage value of the direct current from the photovoltaic module (for example, the photovoltaic module PVM 1), and transmit the voltage value to the direct current bus 10.

Optionally, the boost converter may be connected to the intelligent sub-array controller. The boost converter may adjust, based on a bus voltage reference value of the photovoltaic module that is calculated by the intelligent sub-array controller based on power of the photovoltaic module and the power scheduling instruction, the voltage value of the direct current provided by the photovoltaic module, in other words, adjust the voltage of the direct current bus. In this way, stability of the voltage of the direct current bus can be maintained, and a response speed of the photovoltaic module is increased.

The boost converter in this embodiment of this application may directly transmit the direct current from the photovoltaic module to the direct current bus without a charging/discharging instruction from the intelligent sub-array controller. Therefore, a response speed of the new energy module (or the energy storage system) is increased, to implement fast energy scheduling.

In conclusion, in the energy storage system (including the new energy module and the energy storage module, which may be referred to as a multi-energy complementary energy storage system) provided in this embodiment of this application, randomness of power generation by the new energy module can be suppressed, and a backup capacity of the battery cluster in the energy storage module does not need to be increased. In this way, maintenance of the energy storage module is facilitated, and configuration costs and maintenance costs of the energy storage system are reduced.

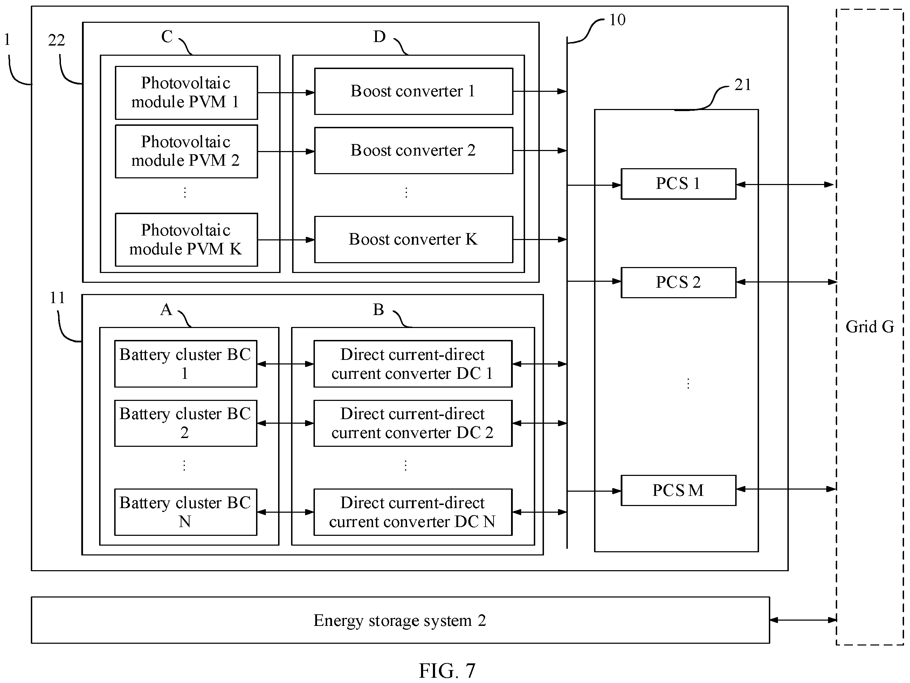

In a possible implementation, as shown in FIG. 7, a plurality of energy storage systems (which may be referred to as direct current coupling units) shown in FIG. 6 may be connected to the grid G. Two energy storage systems (namely, an energy storage system 1 and an energy storage system 2) are used as examples in FIG. 7, to implement energy scheduling of different energy storage systems.

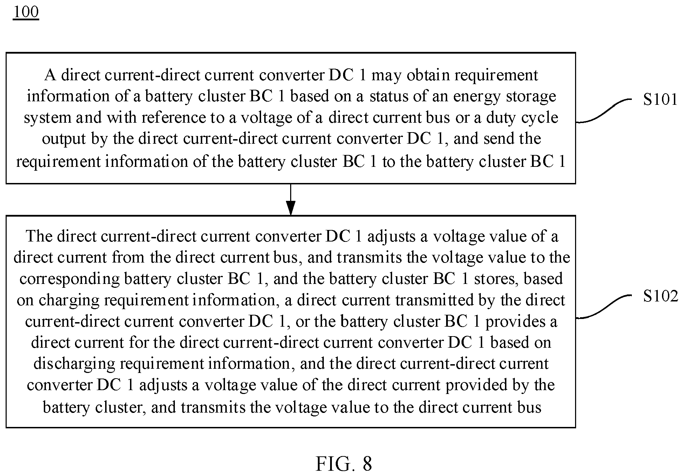

An embodiment of this application further provides a control method for an energy storage system, as shown in FIG. 8. The direct current-direct current converter DC 1 and the battery cluster BC 1 in FIG. 1 and FIG. 2 are used as examples, and a control process 100 may include the following steps.

Step S101: The direct current-direct current converter DC 1 may obtain requirement information of the battery cluster BC 1 based on a status (which may include an off state and an on state (the on state may include a running state and a standby state) of the energy storage system) of the energy storage system and with reference to a voltage of a direct current bus or a duty cycle output by the direct current-direct current converter DC 1, and send the requirement information of the battery cluster BC 1 to the battery cluster BC 1.

Step S102: The direct current-direct current converter DC 1 adjusts a voltage value of a direct current from the direct current bus, and transmits the voltage value to the corresponding battery cluster BC 1, and the battery cluster BC 1 stores, based on charging requirement information, a direct current transmitted by the direct current-direct current converter DC 1 (in other words, the battery cluster BC 1 is charged), or the battery cluster BC 1 provides a direct current for the direct current-direct current converter DC 1 based on discharging requirement information (in other words, the battery cluster is discharged), and the direct current-direct current converter DC 1 adjusts a voltage value of the direct current provided by the battery cluster, and transmits the voltage value to the direct current bus.

Optionally, the requirement information of the battery cluster may include the charging requirement information and the discharging requirement information.

The charging requirement information corresponds to a charging requirement, the charging requirement information may be used to indicate information indicating that the battery cluster needs to store the direct current transmitted by the corresponding direct current-direct current converter, and the charging requirement is used to indicate that the battery cluster needs to store the direct current transmitted by the corresponding direct current-direct current converter.

The discharging requirement information corresponds to a discharging requirement, the discharging requirement information may be used to indicate information indicating that the battery cluster needs to provide a direct current for the corresponding direct current-direct current converter, and the discharging requirement may be used to indicate that the battery cluster needs to provide a direct current for the corresponding direct current-direct current converter.

In the control method for an energy storage system provided in this embodiment of this application, the direct current-direct current converter obtains the requirement information of the corresponding battery cluster based on the status of the energy storage system and with reference to the voltage of the direct current bus or the duty cycle output by the direct current-direct current converter, and then based on the requirement information, the battery cluster stores the direct current transmitted by the corresponding direct current-direct current converter or provides a direct current for the corresponding direct current-direct current converter. In addition, the direct current-direct current converter adjusts the voltage value of the direct current from the direct current bus, and transmits the voltage value to the corresponding battery cluster, or the direct current-direct current converter adjusts the voltage value of the direct current provided by the battery cluster, and transmits the voltage value to the direct current bus. In this way, a voltage level of an energy storage module can be flexibly matched, and the voltage of the direct current bus can be adjusted, to maintain stability of the voltage of the direct current bus.

In a possible implementation, there may be the following two cases in which the direct current-direct current converter DC 1 obtains the requirement information of the battery cluster BC 1 based on the status of the energy storage system and with reference to the voltage of the direct current bus or the duty cycle output by the direct current-direct current converter DC 1, and sends the requirement information of the battery cluster BC 1 to the battery cluster BC 1:
Case 1: When the energy storage system is in the off state, the direct current-direct current converter DC 1 may obtain the requirement information of the battery cluster BC 1 based on the voltage of the direct current bus, and send the requirement information of the battery cluster BC 1 to the battery cluster BC 1.

Further, when the energy storage system is in the off state and the voltage of the direct current bus is greater than a bus voltage reference value (the bus voltage reference value is obtained by an intelligent sub-array controller based on a power scheduling instruction, a state of charge of the battery cluster, and the like), the direct current-direct current converter DC 1 may obtain that the requirement information of the battery cluster BC 1 is the charging requirement information. When the energy storage system is in the off state and the voltage of the direct current bus is less than or equal to a bus voltage reference value, the direct current-direct current converter DC 1 may obtain that the requirement information of the battery cluster BC 1 is the discharging requirement information.

Case 2: When the energy storage system is in the on state, the direct current-direct current converter DC 1 may obtain the requirement information of the battery cluster BC 1 based on the duty cycle output by the direct current-direct current converter DC 1, and send the requirement information of the battery cluster BC 1 to the battery cluster BC 1.

Further, when the energy storage system is in the on state and the duty cycle output by the direct current-direct current converter DC 1 is greater than 0, the direct current-direct current converter DC 1 may obtain that the requirement information of the battery cluster BC 1 is the charging requirement information. When the energy storage system is in the on state and the duty cycle output by the direct current-direct current converter DC 1 is less than 0, the direct current-direct current converter DC 1 may obtain that the requirement information of the battery cluster BC 1 is the discharging requirement information.

It should be noted that when the duty cycle output by the direct current-direct current converter DC 1 is equal to 0, the battery cluster BC 1 corresponding to the direct current-direct current converter DC 1 has no charging requirement (that is, the battery cluster BC 1 does not need to store the direct current transmitted by the direct current-direct current converter DC 1, and the charging requirement corresponds to the charging requirement information) or discharging requirement (that is, the battery cluster BC 1 does not need to provide a direct current for the corresponding direct current-direct current converter DC 1, and the discharging requirement corresponds to the discharging requirement information). Therefore, the direct current-direct current converter DC 1 does not need to obtain the requirement information of the battery cluster BC 1.

Optionally, the duty cycle output by each direct current-direct current converter DC 1 may be obtained based on a duty cycle output by a voltage loop and a duty cycle output by a current loop in each direct current-direct current converter DC 1. The duty cycle output by the voltage loop may be obtained based on the bus voltage reference value of the battery cluster BC 1, and the duty cycle output by the current loop may be obtained based on a preset current limit of the battery cluster BC 1. For a detailed obtaining process, refer to the foregoing description. Details are not described herein in this embodiment of this application.

In a possible implementation, the battery cluster BC 1 (referring to FIG. 3) may include a plurality of battery packs and a plurality of battery management units. The plurality of battery packs are sequentially connected in series, and the plurality of battery management units are connected to the plurality of battery packs in a one-to-one correspondence.

Therefore, in an example, the battery cluster BC 1 may store, based on the charging requirement information in the following process, the direct current transmitted by the corresponding direct current-direct current converter DC 1:
The battery management unit (for example, a battery management unit BMU 1) may obtain a state of charge of the battery pack, and control the battery pack (in other words, the battery management unit controls charging of the battery pack) based on the charging requirement information, the status of the energy storage system, and the state of charge of the battery pack, and the battery pack stores, under control of the battery management unit, the direct current transmitted by the direct current-direct current converter DC 1.

Further, when the energy storage system is in the off state and the requirement information of the battery cluster BC 1 is the charging requirement information, the battery management unit may cut off a battery pack (including a battery pack in a fully charged state) whose state of charge is greater than a preset first state of charge threshold (for example, 95%) in the battery cluster BC 1 (which may be understood as that the battery management unit cuts off the battery pack in the fully charged state (namely, a fully charged battery pack) in the battery cluster BC 1), and cut in another battery pack in the battery cluster BC 1; or when the energy storage system is in the on state and the requirement information of the battery cluster BC 1 is the charging requirement information, the battery management unit cuts off a battery pack whose state of charge is greater than a first state of charge threshold in the battery cluster BC 1.

In another example, the battery cluster BC 1 may provide a direct current for the corresponding direct current-direct current converter DC 1 based on the discharging requirement information in the following process:

The battery management unit obtains a state of charge of the battery pack, and controls the battery pack (in other words, the battery management unit controls discharging of the battery pack) based on the discharging requirement information, the status of the energy storage system, and the state of charge of the battery pack; and the battery pack provides a direct current for the direct current-direct current converter DC 1 under control of the battery management unit.

Further, when the energy storage system is in the off state and the requirement information of the battery cluster BC 1 is the discharging requirement information, the battery management unit may cut off a battery pack (including a battery pack in a fully discharged state) whose state of charge is less than a preset second state of charge threshold (for example, 5%) in the battery cluster BC 1 (which may be understood as that the battery management unit cuts off the battery pack in the fully discharged state (namely, a fully discharged battery pack) in the battery cluster BC 1), and cut in another battery pack in the battery cluster BC 1; or when the energy storage system is in the on state and the requirement information of the battery cluster BC 1 is the discharging requirement information, the battery management unit cuts off a battery pack whose state of charge is less than a second state of charge threshold in the battery cluster BC 1.

It should be noted that if the energy storage system is in the off state and the requirement information of the battery cluster BC 1 neither indicates that the battery cluster BC 1 needs to be charged nor indicates that the battery cluster BC 1 needs to be discharged, in other words, the requirement information of the battery cluster BC 1 is not clear, the battery pack in the battery cluster BC 1 needs to be managed in a preset management manner.

For example, a battery pack with a relatively high state of charge (for example, a battery pack with a state of charge greater than 60%) in the battery cluster BC 1 may be preferably selected for discharge. However, if there are a relatively small quantity of battery packs with a relatively high state of charge and normal running of the energy storage system is affected if the battery pack with a relatively high state of charge is selected for discharge, a battery pack with a relatively low state of charge (for example, a battery pack with a state of charge less than 40%) may be selected for charging.

In this embodiment of this application, the battery pack can be accurately managed based on the status of the energy storage system, the requirement information of the battery cluster, and the state of charge of the battery pack, to resolve a problem that states of charge and power of different battery packs are limited, so as to effectively manage the battery cluster. In other words, in this embodiment of this application, charging or discharging (namely, energy transfer) of the battery pack is implemented, and energy is transmitted without a charging/discharging instruction from the intelligent sub-array controller. Therefore, a response speed of the energy storage module (or the energy storage system) is increased, to implement fast energy scheduling.

In a possible implementation, the battery cluster BC 1 may further include a plurality of series switches (namely, first switches) and a plurality of parallel switches (namely, second switches). Each of the plurality of series switches is connected in series to a corresponding battery pack, and then is connected in parallel to a corresponding parallel switch.

It may be learned that a quantity of battery management units, a quantity of battery packs, a quantity of series switches, and a quantity of parallel switches are equal.

Further, the series switch may be controlled to be closed and the parallel switch may be controlled to be open, to cut in the battery pack. Similarly, the parallel switch may be controlled to be closed and the series switch may be controlled to be open, to cut off the battery pack.

In a possible implementation, the energy storage system may further include a new energy module. Referring to FIG. 6, the new energy module may include a plurality of photovoltaic modules and a plurality of second direct current-direct current converters (which may be boost circuits), and the plurality of photovoltaic modules and the plurality of second direct current-direct current converters may be connected in series in a one-to-one correspondence. One terminal of each second direct current-direct current converter may be configured to be connected to a corresponding photovoltaic module, and the other terminal of each second direct current-direct current converter may be connected to the direct current bus.

Therefore, the photovoltaic module may convert solar energy into a direct current, and output the direct current to a corresponding second direct current-direct current converter, and then the second direct current-direct current converter may adjust a voltage value of the direct current from the corresponding photovoltaic module, and transmit the voltage value to the direct current bus.

The second direct current-direct current converter in this embodiment of this application may directly adjust the voltage value of the direct current from the photovoltaic module, and transmit the voltage value to the direct current bus without a charging/discharging instruction from the intelligent sub-array controller. Therefore, a response speed of the new energy module (or the energy storage system) is increased, to implement fast energy scheduling.

In a possible implementation, a conversion module (one terminal of the conversion module may be configured to be connected to the direct current bus, and the other terminal of the conversion module may be configured to be connected to a grid) in the energy storage system may convert the direct current from the direct current bus into an alternating current, and transmit the alternating current to the grid, or convert an alternating current from the grid into a direct current, and transmit the direct current to the direct current bus.

Further, at least one power converter (one terminal of each power converter may be connected to the direct current bus, and the other terminal of each power converter may be connected to the grid) in the conversion module may convert (which may be "rectify") the direct current that is transmitted by the direct current bus and that is from the first direct current-direct current converter into an alternating current, and transmit the alternating current to the grid, or convert (which may be "invert") the alternating current from the grid into a direct current, and transmit the direct current to the direct current bus.

In this embodiment of this application, the power converter can convert the direct current into an alternating current, and can further convert the alternating current from the grid into a direct current. In this way, voltage conversion and transmission are implemented, and the voltage of the direct current bus is controlled.

In conclusion, in the control method for an energy storage system provided in this embodiment of this application, randomness of power generation by the new energy module can be suppressed, and a backup capacity of the battery cluster in the energy storage module does not need to be increased. In this way, maintenance of the energy storage module is facilitated, and configuration costs and maintenance costs of the energy storage system are reduced.

In the several embodiments provided in this application, the units described as separate parts may or may not be physically separate, and parts displayed as units may or may not be physical units, and may be located at one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, comprising a plurality of energy storage modules, wherein each of the plurality of energy storage modules is connected to a direct current bus;
each energy storage module of a plurality of systems comprises a plurality of battery clusters and a plurality of first direct current-direct current converters, and the plurality of battery clusters and the plurality of first direct current-direct current converters are connected in series in a one-to-one correspondence;
one terminal of the first direct current-direct current converter is configured to be connected to a corresponding battery cluster, and the other terminal of the first direct current-direct current converter is configured to be connected to the direct current bus;
the first direct current-direct current converter is configured to: obtain requirement information of the battery cluster based on a status of the energy storage system and with reference to a voltage of the direct current bus or a duty cycle output by the first direct current-direct current converter, and send the requirement information of the battery cluster to the battery cluster, wherein the requirement information of the battery cluster comprises charging requirement information and discharging requirement information, the charging requirement information is used to indicate information indicating that the battery cluster needs to store a direct current transmitted by the corresponding first direct current-direct current converter, and the discharging requirement information is used to indicate information indicating that the battery cluster needs to provide a direct current for the corresponding first direct current-direct current converter;
the battery cluster is configured to: store, based on the charging requirement information, the direct current transmitted by the corresponding first direct current-direct current converter, or provide the direct current for the corresponding first direct current-direct current converter based on the discharging requirement information; and
the first direct current-direct current converter is further configured to: adjust a voltage value of a direct current from the direct current bus, and transmit the voltage value to the corresponding battery cluster; or adjust a voltage value of the direct current provided by the battery cluster and transmit the voltage value to the direct current bus.

2. The energy storage system according to claim 1, wherein the status of the energy storage system comprises an off state and an on state; and
the first direct current-direct current converter is configured to:
obtain the requirement information of the battery cluster based on the voltage of the direct current bus when the energy storage system is in the off state, and obtain the requirement information of the battery cluster based on the duty cycle output by the first direct current-direct current converter when the energy storage system is in the on state.

3. The energy storage system according to claim 2, wherein the first direct current-direct current converter is configured to:
when the voltage of the direct current bus is greater than a bus voltage reference value, obtain that the requirement information of the battery cluster is the charging requirement information; or
when the voltage of the direct current bus is less than or equal to a bus voltage reference value, obtain that the requirement information of the battery cluster is the discharging requirement information.

4. The energy storage system according to claim 2 or 3, wherein the first direct current-direct current converter is configured to:
when the duty cycle output by the first direct current-direct current converter is greater than 0, obtain that the requirement information of the battery cluster is the charging requirement information; or
when the duty cycle output by the first direct current-direct current converter is less than 0, obtain that the requirement information of the battery cluster is the discharging requirement information.

5. The energy storage system according to any one of claims 2 to 4, wherein the charging requirement information corresponds to a charging requirement of the battery cluster, and the charging requirement of the battery cluster is used to indicate that the battery cluster needs to store the direct current transmitted by the corresponding first direct current-direct current converter; and
the discharging requirement information corresponds to a discharging requirement of the battery cluster, and the discharging requirement of the battery cluster is used to indicate that the battery cluster needs to provide the direct current for the corresponding first direct current-direct current converter.

6. The energy storage system according to any one of claims 2 to 5, wherein the duty cycle output by the first direct current-direct current converter is obtained based on a duty cycle output by a voltage loop and a duty cycle output by a current loop in the first direct current-direct current converter;
the duty cycle output by the voltage loop is obtained based on the bus voltage reference value of the battery cluster; and
the duty cycle output by the current loop is obtained based on a preset current limit of the battery cluster.

7. The energy storage system according to any one of claims 2 to 6, wherein the battery cluster comprises a plurality of battery packs and a plurality of battery management units, the plurality of battery packs are sequentially connected in series, and the plurality of battery management units are connected to the plurality of battery packs in a one-to-one correspondence;
the battery management unit is configured to: obtain a state of charge of the battery pack, and control the battery pack based on the received requirement information of the battery cluster, the status of the energy storage system, and the state of charge of the battery pack; and
the battery pack is configured to: store, under control of the battery management unit, the direct current transmitted by the corresponding first direct current-direct current converter, or provide the direct current for the corresponding first direct current-direct current converter.

8. The energy storage system according to claim 7, wherein the battery management unit is configured to:
when the energy storage system is in the off state and the requirement information of the battery cluster is the charging requirement information, cut off a battery pack whose state of charge is greater than a preset first state of charge threshold in the battery cluster, and cut in another battery pack in the battery cluster; or
when the energy storage system is in the off state and the requirement information of the battery cluster is the discharging requirement information, cut off a battery pack whose state of charge is less than a preset second state of charge threshold in the battery cluster, and cut in another battery pack in the battery cluster

9. The energy storage system according to claim 7 or 8, wherein the battery management unit is configured to:
when the energy storage system is in the on state and the requirement information of the battery cluster is the charging requirement information, cut off a battery pack whose state of charge is greater than a first state of charge threshold in the battery cluster; or
when the energy storage system is in the on state and the requirement information of the battery cluster is the discharging requirement information, cut off a battery pack whose state of charge is less than a second state of charge threshold in the battery cluster.

10. The energy storage system according to any one of claims 7 to 9, wherein the battery cluster further comprises a plurality of first switches and a plurality of second switches; and
each of the plurality of first switches is connected in series to a corresponding battery pack, and then is connected in parallel to a corresponding second switch.

11. The energy storage system according to any one of claims 1 to 10, wherein the energy storage system further comprises a new energy module;
the new energy module comprises a plurality of photovoltaic modules and a plurality of second direct current-direct current converters, and the plurality of photovoltaic modules and the plurality of second direct current-direct current converters are connected in series in a one-to-one correspondence;
one terminal of the second direct current-direct current converter is configured to be connected to a corresponding photovoltaic module, and the other terminal of the second direct current-direct current converter is configured to be connected to the direct current bus;
the photovoltaic module module is configured to: convert solar energy into a direct current, and output the direct current to the second direct current-direct current converter; and
the second direct current-direct current converter is configured to: adjust a voltage value of the direct current from the photovoltaic module and transmit the voltage value to the direct current bus.

12. The energy storage system according to claim 11, wherein the second direct current-direct current converter comprises a boost circuit.

13. The energy storage system according to any one of claims 1 to 12, wherein the energy storage system further comprises a conversion module;
one terminal of the conversion module is configured to be connected to the direct current bus, and the other terminal of the conversion module is configured to be connected to a grid; and
the conversion module is further configured to: convert the direct current from the direct current bus into an alternating current, and transmit the alternating current to the grid, or convert an alternating current from the grid into a direct current, and transmit the direct current to the direct current bus.

14. The energy storage system according to claim 13, the conversion module comprises at least one power converter;
one terminal of the power converter is configured to be connected to the direct current bus, and the other terminal of the power converter is configured to be connected to the grid; and
the power converter is further configured to: convert the direct current that is from the direct current bus and that is transmitted by the direct current bus into an alternating current, and transmit the alternating current to the grid, or convert an alternating current from the grid into a direct current, and transmit the direct current to the direct current bus.

15. A control method for an energy storage system, comprising:
obtaining, by a first direct current-direct current converter, requirement information of a battery cluster based on a status of the energy storage system and with reference to a voltage of a direct current bus or a duty cycle output by the first direct current-direct current converter, and sending the requirement information of the battery cluster to the battery cluster, wherein the requirement information of the battery cluster comprises charging requirement information and discharging requirement information, the charging requirement information is used to indicate that the battery cluster needs to store a direct current transmitted by the corresponding first direct current-direct current converter, and the discharging requirement information is used to indicate that the battery cluster needs to provide a direct current for the corresponding first direct current-direct current converter; and
adjusting, by the first direct current-direct current converter, a voltage value of a direct current from the direct current bus and transmitting the voltage value to the corresponding battery cluster, and storing, by the battery cluster based on the charging requirement information, the direct current transmitted by the corresponding first direct current-direct current converter, or providing, by the battery cluster, the direct current for the corresponding first direct current-direct current converter based on the discharging requirement information, and adjusting, by the first direct current-direct current converter, a voltage value of the direct current provided by the battery cluster and transmitting the voltage value to the direct current bus.
